# FASCICULE DE BREVET EUROPEEN

(11) **EP 1 958 182 B1**
(45) Date de publication et mention de la délivrance du brevet: **12.04.2017**
(21) Numéro de dépôt: 06830398.1
(22) Date de dépôt: 06.12.2006
(51) Int. Cl.: G09G 3/36

(54) **SYSTEME VIDEO COMPRENANT UN AFFICHEUR MATRICIEL A CRISTAUX LIQUIDES A PROCEDE D'ADRESSAGE AMELIORE**
VIDEOSYSTEM MIT EINER DURCH EIN VERBESSERTES ADRESSIERUNGSVERFAHREN GESTEUERTEN FLUSSIGKRISTALLMATRIXANZEIGE
VIDEO SYSTEM INCLUDING A LIQUID CRYSTAL MATRIX DISPLAY WITH IMPROVED ADDRESSING METHOD

(30) Priorité: 07.12.2005 FR 0512411
(43) Date de publication de la demande: 20.08.2008
(73) Titulaire: Thomson Licensing, 92130 Issy-les-Moulineaux (FR)
(72) Inventeur: LEBRUN, Hugues, F-38500 Coublevie (FR); KRETZ, Thierry, F-38430 Saint Jean de Moirans (FR)
(74) Mandataire: Esselin, Sophie
(86) Numéro de dépôt international: PCT/EP2006/069352
(87) Numéro de publication internationale: WO 2007/065903

(56) Documents cités:
- EP-A- 0 478 186
- US-A1- 2004 041 768
- US-A1- 2004 140 985

## Description

La présente invention concerne un procédé de commande d'affichage des pixels pour un afficheur à cristaux liquides à matrice active et plus particulièrement un procédé d'adressage en mode séquentiel couleur.

Un intérêt du mode séquentiel couleur, est la possibilité de réaliser des systèmes d'affichage couleur pour des écrans vision directe sans filtres colorés, c'est-à-dire sans information de couleur attachée à un point d'image ou pixel. Chaque pixel est alors incolore et une boîte à lumière est utilisée qui permet successivement d'éclairer l'afficheur dans les trois couleurs primaires.

L'invention s'applique particulièrement au marché des écrans vision directe : des écrans de téléphone cellulaire aux écrans de grandes dimensions pour la télévision. Elle s'intéresse plus particulièrement aux afficheurs dont les pixels sont commandés de façon analogique. Dans un procédé d'adressage correspondant, la vidéo à afficher sur un pixel est commandée par un niveau de tension analogique, fourni par un convertisseur numérique analogique à partir du signal numérique vidéo reçu. Pour afficher un niveau de gris donné, l'élément actif d'un pixel est activé pendant une période ligne pour transférer un niveau de tension analogique correspondant sur la capacité du pixel. Le cristal liquide s'oriente alors dans une direction qui dépend de la valeur analogique appliquée. Une polarisation lumineuse entrante passant à travers ce cristal liquide est alors modifiée et analysée par un polariseur.

La performance de l'afficheur dépend notamment de la brillance. Celle-ci est fonction du temps d'illumination du pixel. Ce temps d'illumination dépend du temps d'adressage nécessaire pour transférer les niveaux de tension analogique sur chacun des pixels d'une ligne de la matrice, et du temps de stabilisation du cristal liquide, fonction du niveau de tension analogique précédent, et le niveau de tension analogique courant.

Ces contraintes sont accentuées s'agissant d'un afficheur adressé en mode séquentiel couleur. On rappelle que dans un afficheur, les pixels sont organisés matriciellement en lignes et en colonnes, chaque pixel étant disposé au croisement d'une ligne et d'une colonne. Les lignes de cellules sont adressées séquentiellement. Les cellules d'une ligne sont adressées simultanément et reçoivent les nouvelles données analogiques via les colonnes pendant le temps ligne (c'est à dire le temps pendant lequel la ligne associée est sélectionnée). Une phase d'adressage d'un afficheur comprend habituellement une étape d'écriture, pendant laquelle les lignes sont sélectionnées séquentiellement, et les éléments actifs de chaque ligne sélectionnée sont activés pour recevoir et transférer sur la capacité pixel associée le niveau de tension analogique, avec un temps de stabilisation, qui correspond au temps de basculement nécessaire pour que tous les pixels aient commutés; et une étape d'éclairage, pendant lequel le panneau est éclairé, la lumière modulée par l'afficheur et l'image correspondante récupérée. Dans le cas d'un mode séquentiel couleur, ces étapes sont réalisées au moins une fois pour chaque couleur primaire, au sein d'une même trame vidéo. On a généralement trois sous-trames colorées par trame. Dans le temps d'une trame, il faut ainsi adresser au moins trois fois tous les pixels de la matrice pour afficher l'information vidéo correspondant à chaque couleur primaire. Pour éviter de percevoir les différentes trames colorées, il peut être nécessaire d'avoir deux sous trames colorées par couleur primaire ou plus dans une trame vidéo.

Il reste que certains problèmes sont rencontrés avec ces afficheurs, en particulier à cause du temps de réponse du cristal liquide, qui est fonction du niveau de tension analogique mémorisé pendant la sous-trame précédente et du niveau de tension analogique à charger pendant la nouvelle sous-trame. Si on prend l'exemple d'un afficheur à cristaux liquides du type TN (*Twisted Nematic*), le temps de basculement du cristal liquide d'un niveau de gris à un autre niveau de gris est bien supérieur au temps de basculement du niveau noir au niveau blanc, ou du niveau blanc à un niveau de gris. Le niveau noir est le mode du cristal liquide dans lequel la différence de potentiel entre le pixel et la contre-électrode est le maximum. Le niveau blanc est le mode du cristal liquide dans lequel la différence de potentiel entre le pixel et la contre-électrode est le minimum. Un niveau de gris est un niveau intermédiaire : les gris clairs correspondent à une différence de potentiel appliquée proche de celle appliquée pour obtenir du blanc; les gris foncés correspondent à une différence de potentiel proche de celle appliquée pour obtenir du noir. Le temps de basculement du niveau blanc à un niveau gris clair peut ainsi être une fois et demie supérieur au temps de basculement du niveau noir à ce même niveau de gris clair. Le temps de basculement d'un niveau de gris au niveau noir est lui très court. Dans un exemple, avec des cristaux liquides du type TN, on a pu mesurer les temps de basculement suivants : 0.2 milliseconde, pour basculer du blanc au noir; 1 milliseconde, pour basculer du noir au blanc; 3.25 millisecondes, dans le pire cas mesuré entre deux niveaux de gris.

Dans l'invention, on cherche à améliorer les performances d'un afficheur à cristaux liquides. Notamment, on cherche à améliorer la brillance de l'afficheur. Un moyen d'améliorer la brillance, est d'augmenter le temps d'éclairage du panneau à chaque phase d'adressage du panneau.

On cherche encore à améliorer les performances d'un afficheur à cristaux liquides du type séquentiel couleur dont la fréquence d'affichage des couleurs est augmentée pour résoudre le problème bien connu de rupture des couleurs (*color break-up*), dû notamment au temps de stabilisation du cristal liquide. On a ainsi par exemple deux sous-trames colorées par couleur primaire, dans chaque trame vidéo. Or la limite supérieure du temps d'adressage de l'afficheur est fixée par la durée de la trame vidéo. Si on double la fréquence vidéo, cela revient à diviser par deux la durée de la trame vidéo ce qui n'est pas sans poser de problème. Notamment les pixels des dernières lignes du panneau peuvent ne pas avoir assez de temps pour atteindre leur nouvelle consigne de niveau vidéo. Si la précédente phase d'adressage correspondant à une sous-trame rouge, dans la sous-trame suivante, par exemple la sous-trame verte, il peut rester dans le bas du panneau des données correspondant à la sous-trame rouge précédente.

On voit que pour résoudre ces différents problèmes, il est utile de réduire le temps nécessaire à l'adressage des cellules, c'est à dire, réduire la durée des étapes d'écriture et stabilisation, de manière à pouvoir disposer d'une durée d'éclairage plus importante donc améliorer la brillance, et à permettre de multiplier le nombre de sous-trames colorées dans chaque trame vidéo, de manière à réduire l'effet stroboscopique dû à la fréquence d'allumage et d'extinction de la boîte à lumière.

La demande de brevet US 2004/0041768 concerne un afficheur séquentiel couleur prévoyant dans la structure des pixels, un double circuit de commande à transistors et capacité de stockage, et deux lignes de sélection par rangée de pixel, permettant en parallèle dans chaque sous-trame de commander l'affichage des données couleurs de la sous-trame couleur courante et la précharge des données couleurs pour la sous-trame couleur suivante.

Un objet de l'invention est un procédé d'adressage d'un afficheur à cristaux liquides par lequel les performances de l'afficheur sont améliorées.

Un objet de l'invention, est un procédé d'adressage qui s'appuie sur les dispositifs de contrôle de l'affichage, et ne nécessite que peu de modifications.

Un autre objet de l'invention est un système de projection couleur à simple panneau d'affichage à cristaux liquides.

L'invention concerne donc un système vidéo comprenant un afficheur à cristaux liquides avec un panneau de pixels arrangés en lignes et colonnes comprenant un circuit d'écriture des pixels du panneau et une boite à lumière pour piloter un affichage de données image d'une trame vidéo comprenant au moins une phase d'adressage des lignes du panneau, tel que dans chaque phase d'adressage:
- le circuit d'écriture des pixels réalise une étape d'écriture des lignes, comprenant pour chaque ligne une phase de sélection de ladite ligne pendant un temps ligne et l'application sur chacun des pixels de la ligne sélectionnée, par une colonne respective, d'un niveau de tension analogique correspondant à des données image à afficher;
- la boîte à lumière active une étape d'éclairage pour éclairer les pixels. Le système vidéo est caractérisé en ce qu'il comprend un circuit de précharge des pixels du panneau à une tension de précharge, distinct du circuit d'écriture et qui est activé en séquence en début de chaque phase d'adressage pour réaliser une étape de précharge des pixels avant ladite étape d'écriture par le circuit d'écriture ; en en ce que le circuit de précharge comprend une pluralité de transistors de lignes, un par ligne et une pluralité de transistors de colonne, un par colonne, lesdits transistors de ligne et colonne du circuit de précharge étant activés simultanément dans ladite étape de précharge, les transistors de ligne pour sélectionner toutes les lignes du panneau simultanément, et les transistors de colonne pour appliquer une tension de précharge sur toutes les colonnes simultanément.

L'afficheur est avantageusement du type séquentiel couleur.

D'autres avantages et caractéristiques de l'invention sont détaillés dans la description suivante en référence aux dessins illustrés d'un mode de réalisation de l'invention, donné à titre d'exemple non limitatif. Dans ces dessins :
- la figure 1 illustre un panneau d'affichage LCD selon l'invention;
- la figure 2 est un schéma-bloc d'un dispositif de commande des colonnes du panneau selon l'état de l'art;
- la figure 3 illustre une variante du panneau d'affichage LCD selon l'invention;
- les figures 4a et 4b illustrent un procédé d'adressage selon l'invention selon une première et une deuxième mises en oeuvre;
- la figure 5 illustre schématiquement un circuit de référence de tension permettant de varier l'échelle de gris en fonction de la position du pixel dans le panneau;
- la figure 6 illustre l'effet de dégradé de luminance obtenu avec un procédé d'adressage conforme à la deuxième mise en oeuvre (figure 4b); et
- la figure 7 illustre la compensation de cet effet obtenu selon un perfectionnement de l'invention.

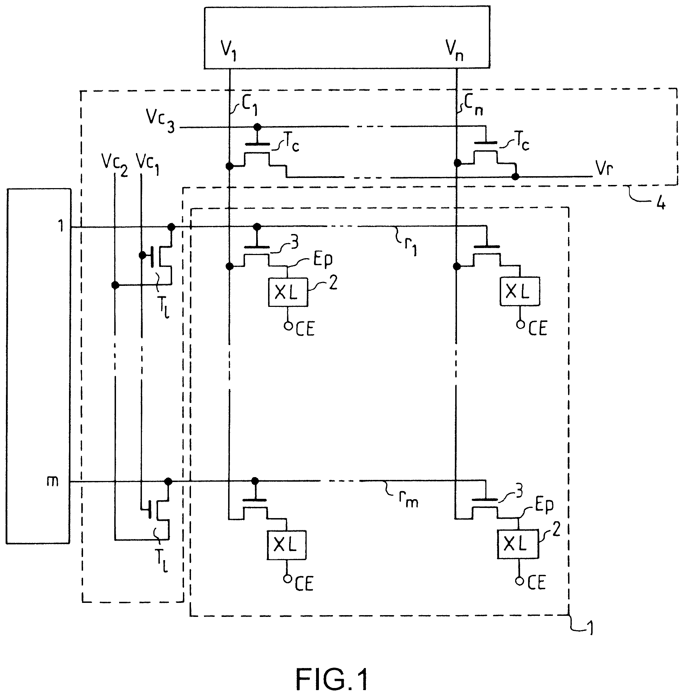

Sur la figure 1 est illustré un schéma-bloc d'un afficheur LCD, avec un panneau 1 à matrice active. Il comprend un premier substrat supportant les transistors et les électrodes pixel, un deuxième substrat comportant ou non des filtres colorés et une contre-électrode CE commune à tous les pixels du panneau, posée ou non sur les filtres colorés. Les deux substrats sont sensiblement parallèles et espacés l'un de d'autre, avec du cristal liquide dans l'espace entre les deux substrats entre la contre-électrode et la matrice active.

Le panneau consiste en m lignes r₁ à rₘ comprenant chacune n éléments d'affichage ou pixels 2, et n colonnes c₁ à cₙ avec m pixels 2 dans chaque colonne. Chaque pixel a un élément actif associé, dans l'exemple, un transistor 3. De manière habituelle, les électrodes de grille des transistors dans une même ligne sont reliées en commun au conducteur de ligne r₁,...rₘ et les électrodes conductrices de source ou de drain des transistors dans une même colonne sont reliées en commun au conducteur de colonne c₁,...cₙ, l'autre électrode étant reliée à une électrode pixel Ep du pixel 2 associé.

L'adressage de chacune des lignes du panneau 1 consiste à appliquer une tension de grille sur le conducteur de ligne associé, pendant un temps d'adressage ligne tₗ (ou temps ligne). Ceci a pour effet de mettre à l'état ON (passant) tous les transistors 3 de cette ligne. L'information vidéo présente sur les n colonnes est transférée sur les électrodes pixel Ep.

A chaque phase d'adressage, correspondant à un flux de n données entrant à écrire dans les pixels du panneau, les lignes sont ainsi adressées chacune pendant un temps ligne, en sorte de réaliser un balayage de toutes les lignes du panneau d'affichage. L'adressage se fait habituellement en séquence, ligne après ligne. D'autres modes d'adressage des lignes sont possibles. Notamment les lignes d'un panneau peuvent être réparties en différents groupes, en sorte qu'il soit possible d'adresser en écriture plusieurs lignes simultanément.

Une phase d'adressage peut correspondre à une trame vidéo, ou à une sous-trame colorée dans le cas d'un afficheur séquentiel couleur.

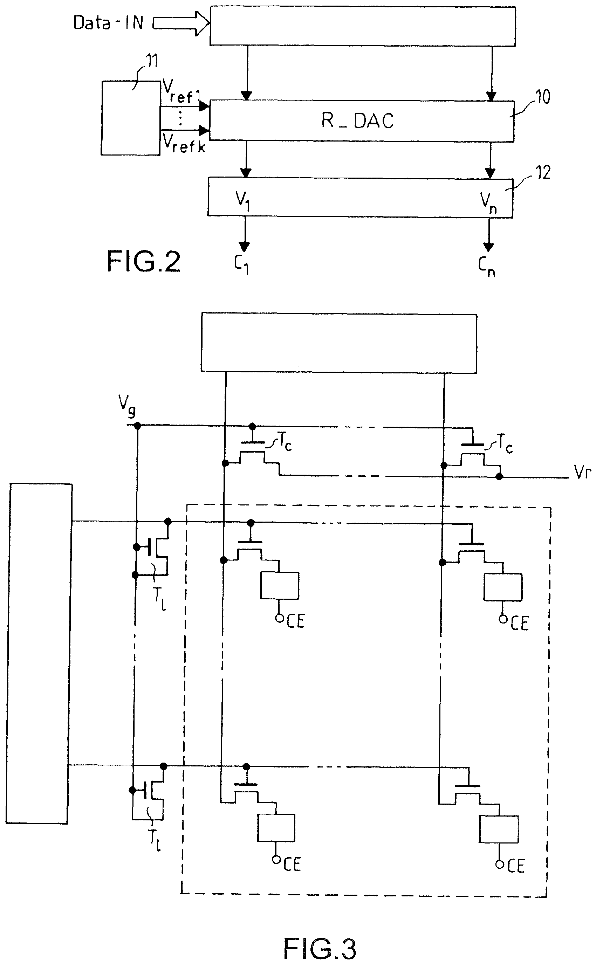

Comme schématiquement illustré sur la figure 2, l'information vidéo appliquée sur les colonnes consiste en un ensemble de niveaux de tension analogique, un par colonne, V₁ à Vₙ, correspondant au flux de signaux vidéo numérique entrant (Data_{IN}). Cet ensemble de niveaux de tension analogique est fourni par un convertisseur numérique analogique 10. Dans un exemple d'architecture connue, ce convertisseur est de type R-DAC, c'est à dire qu'il utilise un circuit de référence de tension 11, qui fournit k niveaux de tension analogique de référence V_{ref1} à V_{refk} et une chaîne de résistances en série qui établit des ponts diviseur résistifs à l étages entre chaque niveau de référence, pour fournir les niveaux de tension analogique V₁ à Vₙ. Le convertisseur établit une bijection entre chaque code numérique reçu en entrée et un niveau de tension analogique V₁ à Vₙ. Le nombre de niveaux de gris du panneau est égal à (k-1).I ou (k-1).I/2 suivant le mode d'adressage choisi. Pour chaque série de données numériques du flux entrant Data_{IN} correspondant aux données d'une ligne de l'afficheur, le convertisseur 10 fournit ainsi en sortie un ensemble de n niveaux de tension analogiques V₁ à Vₙ, via un dispositif amplificateur 12, niveaux qui sont appliqués sur les colonnes c₁ à cₙ.

Selon l'invention, et comme illustré sur la figure 1, l'afficheur comprend un circuit 4 de précharge des pixels 2 du panneau 1. Ce circuit de précharge comprend m transistors de précharge TI associés aux lignes, un par ligne, et n transistors de précharge Tc associés aux colonnes, un par colonne. Les transistors de précharge TI associés aux lignes, ont une électrode conductrice reliée au conducteur de ligne associé, l'autre électrode conductrice étant reliée à un premier conducteur commun à tous les transistors de précharge (figure 1), ou à l'électrode de grille (figure 3). L'électrode de grille est reliée à un deuxième conducteur commun à tous les transistors de précharge. Les transistors de précharge Tc associés aux colonnes, ont une électrode conductrice reliée au conducteur de colonne associé. L'autre électrode conductrice est reliée à un premier conducteur commun à tous les transistors de précharge. L'électrode de grille est reliée à un deuxième conducteur commun à tous les transistors de précharge.

Dans l'étape de précharge, les grilles des transistors de précharge des lignes TI sont portées à une tension de commande Vc₁. Leurs électrodes conductrices communes, sont portées à une tension de commande Vc₂, en sorte que toutes les lignes r₁ à rₘ se trouvent simultanément sélectionnées. Ce mode de commande des transistors de précharge des lignes TI permet avantageusement d'inverser la polarité de la tension de précharge Vᵣ à chaque phase d'adressage. Ceci permet d'obtenir une tension moyenne nulle sur le cristal liquide et évite le marquage des panneaux.

Dans une autre variante de réalisation, on remplace les transistors de précharge par une diode. Ceci peut être obtenu simplement comme illustré sur la figure 3, avec les transistors TI, en court-circuitant leur grille avec l'électrode conductrice qui était précédemment reliée à Vc₂. Cette variante a pour avantage de ne nécessiter qu'une seule tension de commande de précharge pour commander l'état passant ou bloqué de la diode. Dans l'exemple, la tension de grille appliquer sur les transistors TI et Tc est la même notée Vg. Si on veut pouvoir inverser la polarité de la tension de précharge, il faut prévoir une deuxième diode, en sorte qu'il y ait toujours une diode passante, selon la polarité de la tension de précharge (non illustré).

Dans cette étape de précharge, les grilles des transistors de précharge des colonnes Tc sont portées à une tension de commande Vc₃ (Figure 1) ou Vg (Figure 3) et leurs électrodes conductrices communes sont portées à une tension de précharge Vr, en sorte que toutes les colonnes c₁ à cₙ se trouvent portées à un même niveau de tension de précharge sensiblement égal à Vr.

On notera que le taux d'utilisation des transistors de précharge des lignes et des colonnes est très faible. Ils ne sont actifs qu'une fois par phase d'adressage. Leur temps d'activation et le niveau de la tension de précharge Vr sont ajustés en pratique selon les paramètres du cristal liquide de l'afficheur, selon la température de fonctionnement de l'afficheur. Leurs caractéristiques évoluent au cours du temps sensiblement de la même façon que les transistors 3 associés aux pixels.

Selon un premier mode de réalisation de l'invention, le niveau de précharge Vr correspond au niveau blanc, soit typiquement 0 volt. Dans cette mise en oeuvre, on a vu précédemment que le passage du noir au blanc ou d'un niveau de gris au niveau blanc est lent. La durée de la précharge est prévue en conséquence. Mais l'étape d'écriture qui suit est alors rapide, puisqu'il s'agit de passer d'un niveau blanc pour tous les pixels, à un niveau quelconque : blanc, gris ou noir.

Selon un deuxième mode de réalisation de l'invention, le niveau de précharge Vr correspond au niveau noir, soit typiquement de l'ordre de 6 volts. Dans cette mise en oeuvre, on a vu précédemment que le passage du blanc au noir ou d'un niveau blanc au niveau de gris est rapide. En outre, alors mettre en oeuvre facilement un mode de commande des pixels dit d"'overdrive". Dans ce mode, les niveaux de tension appliqués sur les pixels sont surévalués par rapport à une valeur cible désirée, en sorte que cette valeur cible soit dépassée, et que le retard de commutation du cristal liquide ait pour effet de faire revenir le niveau de tension sur le pixel à la valeur cible, en fin de commutation. Ceci est aisé à mettre en oeuvre car on réalise une précharge du pixel au niveau noir. On part donc pour chacun des pixels d'un niveau toujours connu, le noir. Ce niveau noir correspond généralement à 6 volts. Supposons que le nouvel objectif soit un niveau de gris donné, qui est normalement obtenu avec une consigne de 3 volts sur le pixel avec l'échelle de gris appliquée. Selon la technique d"'overdrive", on applique alors une consigne de 2,5 volts sur le pixel, au lieu de 3 volts, de manière à forcer la commutation du cristal liquide : le pixel va se charger plus vite à 2,5 volts, qu'il ne l'aurait fait à 3 volts. Le niveau 2,5 volts est déterminé pour que l'effet de retard de commutation du cristal liquide fasse remonter le niveau sur le pixel de 2,5 volts aux 3 volts voulus en fin de commutation. L'effet est double : on accélère la commutation et on évite la dilution de tension lors de la commutation du cristal liquide. En pratique, on prévoit ainsi que l'ensemble des valeurs de tension analogique de référence qui code l'échelle de gris déterminée pour le panneau est choisi pour permettre un mode de commande des pixels de type overdrive.

Selon ce deuxième mode de réalisation de l'invention, avec une précharge au niveau noir, la durée de la précharge est plus courte. Elle peut durer moins de 0.2 milliseconde. L'étape d'écriture qui suit est alors plus lente que dans le premier mode de réalisation, puisqu'il s'agit de passer d'un niveau noir, haut (6 volts) pour tous les pixels, à un niveau quelconque : blanc, gris ou noir. Mais elle est mieux contrôlée et plus rapide que dans l'art antérieur, sans précharge.

Une phase d'adressage selon l'invention comprend alors une étape de précharge, pendant une durée tp, suivie d'une étape d'écriture de durée tw. La phase d'adressage comprend encore une étape d'éclairage du panneau de pixels.

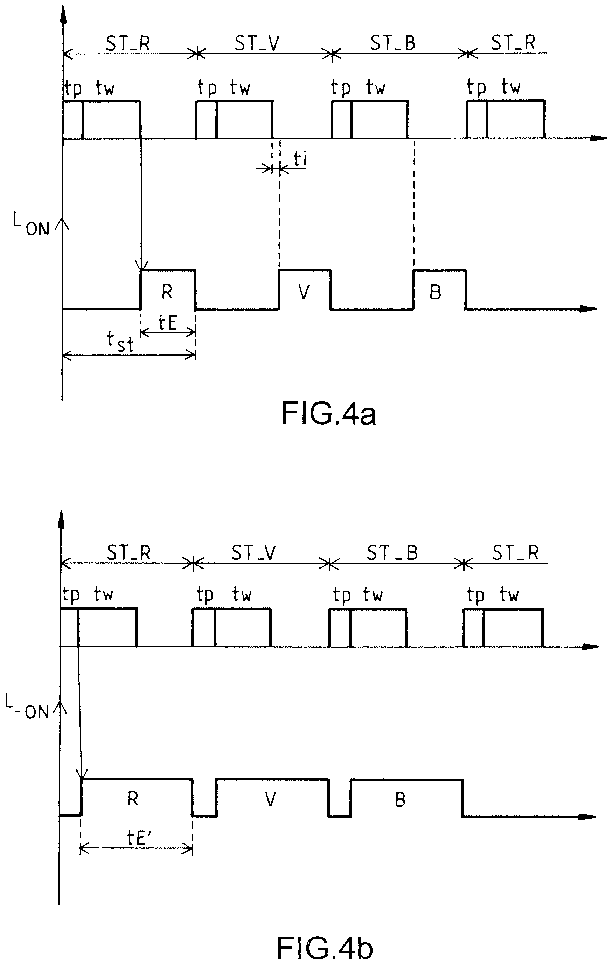

Dans une première mise en oeuvre selon l'invention illustrée sur la figure 4a, l'étape d'éclairage est activée (L-on) après la fin de l'étape d'écriture de la phase d'adressage courante. On a ainsi une durée d'éclairage t_{E} pour chaque phase d'adressage sensiblement égale à la durée tₛₜ de la phase d'adressage moins la somme des durées des étapes de précharge (tₚ) et d'écriture (t_{w}). En pratique, on a un délai tᵢ entre la fin de l'étape d'écriture et l'étape d'éclairage correspondante, pour ne pas passer de l'information avant que le cristal liquide de tous les pixels soit stabilisé sur les dernières lignes adressées du panneau.

Dans une deuxième mise en oeuvre de l'invention illustrée sur la figure 4a, la boîte à lumière est activée (L-on) dès la fin de l'étape de précharge de la phase d'adressage courante. Cette mise en oeuvre n'est applicable que dans le cas où le niveau de précharge est le noir. En effet, dans ce cas, l'éclairage de la boîte à lumière pendant l'étape d'écriture n'est pas susceptible de faire passer une information erronée, ce qui n'est pas le cas avec tout autre niveau de précharge (blanc ou gris).

On a ainsi une durée d'éclairage t_{E}' pour chaque sous trame ST-R, ST-V ou ST-B qui est sensiblement égale à la durée tₛₜ de la phase d'adressage. On a vu que la durée tp de la précharge pendant laquelle la boîte à lumière est éteinte est dans le cas d'une précharge au niveau noir, inférieure à 0.2 microseconde, soit négligeable. En pratique, l'activation de la lampe est effectuée après la fin de l'étape de précharge.

Le temps d'éclairement t_{E}' du panneau pour chaque phase d'adressage est bien plus important que dans la première mise en oeuvre (Figure 4a). La brillance de l'afficheur est améliorée.

Dans le cas de la précharge au niveau noir, on peut même prévoir que la boîte à lumière est allumée pendant la précharge. Dans ce cas, la boîte à lumière est allumée tout le temps.

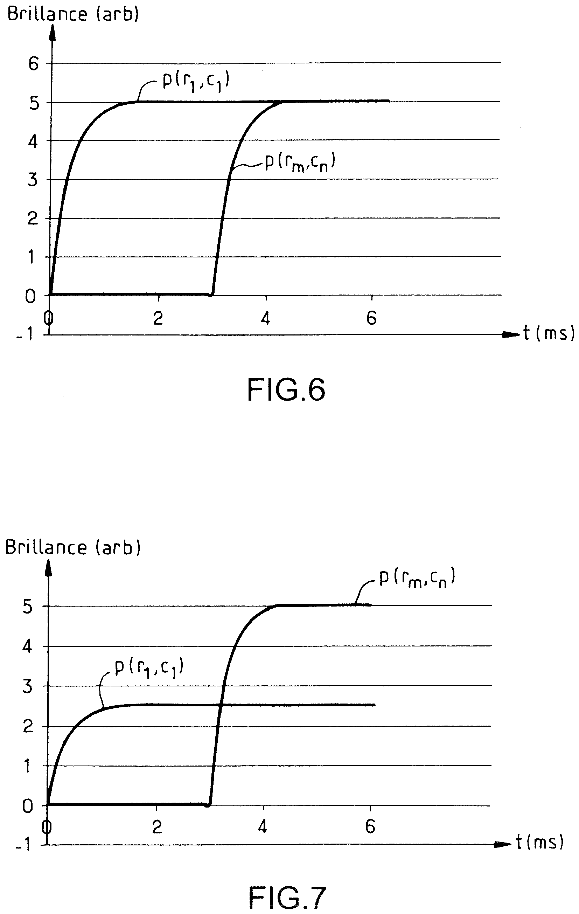

Dans un tel contexte, les pixels étant préchargés au niveau noir et la boîte à lumière allumée quasiment tout le temps de la phase d'adressage, et les lignes de la matrice sélectionnées une à une séquentiellement, il apparaît une disparité de la brillance des pixels, selon leur position dans le panneau d'affichage et selon le niveau de gris commandé. En effet, les pixels de la première ligne qui est sélectionnée en premier dans la phase d'adressage, ont un temps d'affichage du blanc plus long de m temps lignes par rapport aux pixels de la m-ième ligne du panneau qui est sélectionnée en dernier dans la phase d'adressage. Il y a un fort dégradé de luminance entre le haut et le bas du panneau. La figure 6 illustre cette disparité des brillances entre le premier pixel p(r₁, c₁), première ligne r₁ et première colonne c₁, et le dernier pixel p(rₘ, cₙ), dernière ligne rₘ et dernière colonne cₙ, dans un exemple d'affichage du blanc sur le premier et le dernier pixel du panneau.

Dans l'invention, on prévoit de compenser ce dégradé de luminance par un ajustement de la tension analogique commutée sur les pixels en fonction de la position de ces pixels dans le panneau. Pour illustrer cette compensation, en reprenant l'exemple de l'affichage du blanc sur le premier pixel et le dernier pixel du panneau et en admettant que la brillance du premier pixel p(r₁,c₁) soit deux fois supérieure à la brillance du dernier pixel p(rₘ,cₙ), le niveau de tension analogique appliqué pour le blanc est tel que la transmission de ce pixel cumulée sur le temps d'éclairage (quasiment le temps de la phase d'adressage) est divisée par deux par rapport à celle du dernier pixel. C'est ce qui est illustré sur la figure 7.

Ce perfectionnement de l'invention est obtenu en prévoyant d'appliquer une échelle de niveaux de gris en fonction de la position de la ligne adressée. Cela revient à moduler les niveaux de tension analogiques V₁ à Vₙ appliqués sur les colonnes en fonction de la position du pixel dans le panneau. Ce perfectionnement est applicable également dans le cas d'une précharge en blanc. Il permet d'améliorer la qualité de l'affichage vidéo.

L'échelle de niveaux de gris est habituellement calibrée pour chaque panneau de manière à intégrer une compensation dite gamma (ou courbe en S) pour améliorer les performances d'affichage de l'afficheur.

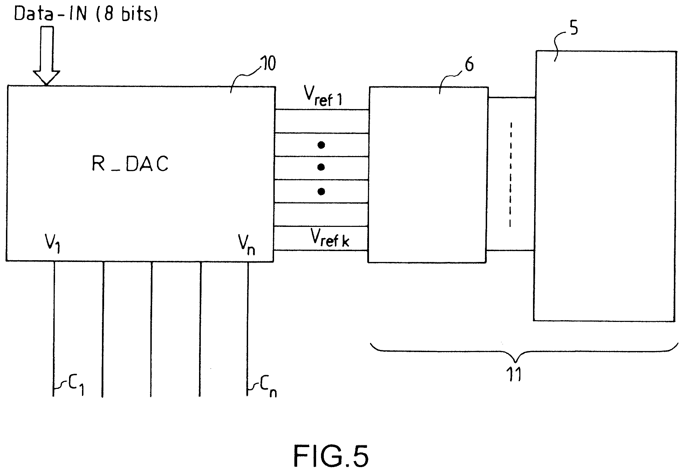

Dans l'invention, on prévoit d'ajuster cette échelle en fonction de la ligne adressée. En pratique, on modifie les valeurs des références de tension Vref₁ à Vrefₖ au début de chaque nouvelle étape d'écriture. Ceci peut être par exemple obtenu en prévoyant, comme illustré schématiquement sur la figure 5, un circuit de référence de tension 11 (figure 2) comprenant un dispositif 5 de mémorisation d'ensembles de valeurs numériques, chaque ensemble codant une échelle de gris pour une ou plusieurs lignes du panneau. De préférence, pour permettre une commande des pixels de type overdrive, chaque ensemble de valeurs numériques mémorisé et qui code une échelle de gris déterminée, est choisi pour permettre un mode de commande des pixels de type overdrive.

Le dispositif 5 peut par exemple être une mémoire de type RAM. Il est associé à un circuit 6 de k convertisseurs numériques analogiques, qui fournit en sortie les valeurs analogiques de référence Vref₁ à Vrefₖ.

Les circuits 10 et 11 sont synchronisés pour qu'à chaque nouvelle étape d'écriture, on ait en entrée du circuit 10, un set de référence Vref₁ à Vrefₖ correspondant à la ligne sélectionnée. Ceci peut être réalisé par un circuit 11 de référence de tension tel que décrit précédemment et illustré à la figure 5, synchronisé de manière adaptée.

On peut en outre, seul ou en combinaison avec ce perfectionnement, inverser le sens de balayage vertical (sens de sélection des lignes) du panneau tous les j phases d'adressage, où j est un entier non nul. Dans le cas d'un afficheur séquentiel couleur, on peut notamment prévoir le mode d'adressage selon le schéma suivant, avec inversion du sens de balayage vertical de trame vidéo en trame vidéo, et même sens de sélection des lignes pour toutes les sous-trames d'une même trame :
trame i :
   - sous trame colorée rouge : sélection de la ligne r₁ à la ligne rₘ.
   - sous trame colorée verte : sélection de la ligne r₁ à la ligne rₘ.
   sous trame colorée bleu : sélection de la ligne r₁ à la ligne rₘ.
trame i+1 :
   - sous trame colorée rouge : sélection de la ligne rₘ à la ligne r₁.
   - sous trame colorée verte : sélection de la ligne rₘ à la ligne r₁.
   - sous trame colorée bleue : sélection de la ligne rₘ à la ligne r₁.

On peut aussi prévoir d'inverser le sens de sélection entre une sous-trame colorée et la sous-trame colorée de même couleur suivante. Ceci s'applique notamment dans le cas où l'on prévoit plus d'une sous-trame colorée par couleur primaire dans chaque trame vidéo.

Dans un exemple où l'on prévoit la division de chaque trame image en six sous-trames colorées, soit deux sous-trames par couleur primaire, on peut alors avoir le séquencement suivant :
trame i :
   - sous trame colorée rouge : sélection de la ligne r₁ à la ligne rₘ.
   - sous trame colorée verte : sélection de la ligne r₁ à la ligne rₘ.
   - sous trame colorée bleu : sélection de la ligne r₁ à la ligne rₘ.
   - sous trame colorée rouge : sélection de la ligne rₘ à la ligne r₁.
   - sous trame colorée verte: sélection de la ligne rₘ à la ligne r₁.
   - sous trame colorée bleu : sélection de la ligne rₘ à la ligne r₁.
trame i+1:
   - sous trame colorée rouge : sélection de la ligne r₁ à la ligne rₘ.
   - sous trame colorée verte : sélection de la ligne r₁ à la ligne rₘ.
   - sous trame colorée bleu : sélection de la ligne r₁ à la ligne rₘ.
   - sous trame colorée rouge : sélection de la ligne rₘ à la ligne r₁.
   - sous trame colorée verte : sélection de la ligne rₘ à la ligne r₁.
   - sous trame colorée bleu: sélection de la ligne rₘ à la ligne r_{1.}

L'invention qui vient d'être décrite est applicable à tout afficheur dont on veut améliorer la luminance ou la consommation d'énergie à luminance constante. Elle s'applique aussi à des afficheurs qui ne comportent qu'une seule phase d'adressage par trame vidéo, avec un éclairage en lumière blanche dynamique, sur un panneau dont la structure est avec ou sans filtres colorés. Elle s'applique aussi bien à des afficheurs utilisant un mode d'adressage dans lequel les m lignes du panneau sont sélectionnées chacune l'une après l'autre, ou dans lequel plusieurs lignes peuvent être sélectionnées à la fois. Ceci est notamment possible dans un afficheur matriciel à affichage séquentiel des couleurs, du type à matrice active, dont les lignes sont réparties en p groupes et dans lequel chaque colonne de pixel comprend p conducteurs colonnes permettant une sélection en écriture des pixels de p lignes en parallèle, une ligne par groupe. Chaque groupe peut par exemple comprendre m/p lignes successives du panneau, en sorte que l'afficheur est organisé en p bandes de m/p lignes.

## Revendications

1. Système vidéo comprenant un afficheur à cristaux liquides avec un panneau (1) de pixels (2) arrangés en lignes et colonnes comprenant un circuit d'écriture des pixels du panneau et une boite à lumière pour piloter un affichage de données image d'une trame vidéo comprenant au moins une phase d'adressage des lignes du panneau, tel que dans chaque phase d'adressage:
- le circuit d'écriture des pixels réalise une étape d'écriture des lignes, comprenant pour chaque ligne (r₁, ... rₘ), une phase de sélection de ladite ligne pendant un temps ligne et l'application sur chacun des pixels de la ligne sélectionnée, par une colonne respective, d'un niveau de tension analogique (V₁,...Vₙ), correspondant à des données image à afficher;
- la boîte à lumière active une étape d'éclairage pour éclairer les pixels, **caractérisé en ce qu'**il comprend un circuit de précharge des pixels (4) du panneau à une tension de précharge (Vᵣ), distinct du circuit d'écriture et qui est activé en séquence en début de chaque phase d'adressage pour réaliser une étape de précharge des pixels avant ladite étape d'écriture par le circuit d'écriture, et **en ce que** le circuit de précharge (4) comprend une pluralité de transistors de lignes (Tl), un par ligne et une pluralité de transistors de colonne (Tc), un par colonne, lesdits transistors de ligne et colonne du circuit de précharge étant activés simultanément dans ladite étape de précharge, les transistors de ligne pour sélectionner toutes les lignes du panneau simultanément, et les transistors de colonne pour appliquer une tension de précharge (Vr) sur toutes les colonnes simultanément.

2. Système vidéo selon la revendication 1, **caractérisé en ce que** la polarité de la tension de précharge (Vr) est inversée à chaque phase d'adressage.

3. Système vidéo selon la revendication 1 ou 2, **caractérisé en ce que** ladite tension de précharge (Vᵣ) correspond au niveau blanc et la boîte à lumière est éteinte pendant ladite étape de précharge.

4. Système vidéo selon la revendication 3, **caractérisé en ce que** dans chaque phase d'adressage, l'étape d'allumage de la boîte à lumière est activée après l'étape d'écriture.

5. Système vidéo selon la revendication 1 ou 2, **caractérisé en ce que** ladite tension de précharge (Vᵣ) correspond au niveau noir et la boîte à lumière est éteinte pendant ladite étape de précharge.

6. Système vidéo selon la revendication 5, **caractérisé en ce que** dans chaque phase d'adressage, l'étape d'allumage de la boîte à lumière et l'étape d'écriture sont activées sensiblement en même temps.

7. Système vidéo selon la revendication 1 ou 2, **caractérisé en ce que** ledit niveau de précharge (Vᵣ) est un niveau noir et la boîte à lumière allumée pendant la précharge.

8. Système vidéo selon l'une quelconque des revendications précédentes, **caractérisé en ce que** pour un niveau de gris donné à afficher sur un pixel préchargé, la valeur du niveau de tension analogique à appliquer sur une colonne correspondante est modulée en fonction de la position dans le panneau de la ligne correspondante du pixel.

9. Système vidéo selon la revendication 8, l'application d'un niveau de tension analogique (V₁,...Vₙ) sur chacun des pixels d'une ligne sélectionnée dans l'étape d'écriture étant réalisée au moyen d'un circuit de conversion numérique vers analogique (10) et d'un ensemble de valeurs de tension analogique de référence (Vref₁,...Vrefₖ) codant une échelle de gris, **caractérisé en ce que** l'étape d'écriture comprend la sélection d'un ensemble de valeurs de tension analogique de référence fonction de la position de la ligne sélectionnée courante, dans le panneau.

10. Système vidéo selon la revendication 9, **caractérisé en ce que** les valeurs de tension analogique de référence sont déterminées pour permettre un mode de commande des pixels de type overdrive.

11. Système vidéo selon l'une quelconque des revendications précédentes, **caractérisé en ce que** le sens de sélection des lignes du panneau est alterné toutes les j phases d'adressage, j entier non nul.

12. Système vidéo comprenant un afficheur à cristaux liquides en mode séquentiel couleur selon l'une quelconque des revendications précédentes, une trame vidéo comprenant au moins une sous-trame colorée par couleur primaire, **caractérisé en ce que** ladite phase d'adressage est répétée pour chaque sous-trame colorée (ST-R, ST-V, ST-B) d'une trame vidéo.

13. Système vidéo selon la revendication 12, **caractérisé en ce que** le sens de sélection des lignes du panneau est alterné de trame vidéo en trame vidéo ou dans une trame vidéo, entre les sous-trames colorées de même couleur.

14. Système vidéo selon la revendication 1, **caractérisé en ce que** lesdits de transistors de ligne et de colonne du circuit de précharge sont intégrés à l'afficheur ou externes à l'afficheur.

15. Système vidéo selon la revendication 1, **caractérisé en ce que** lesdits transistors de ligne (TI) sont montés en diode.

## Patentansprüche

1. Videosystem mit einer Flüssigkristallanzeige mit einer Tafel (1) mit Pixeln (2), die in Zeilen und Spalten angeordnet sind, umfassend eine Schreibschaltung für die Pixel der Tafel und einen Lichtkasten für die Steuerung einer Anzeige von Bilddaten eines Videoframes mit mindestens einer Phase der Adressierung der Tafelzeilen derart, dass in jeder Adressierungsphase
- die Pixelschreibschaltung einen Schritt des Zeilenschreibens durchführt, welcher für jede Zeile (r₁, ... rₘ) eine Phase des Auswählens der Zeilen während einer Zeilenzeit und das Anlegen eines analogen, anzuzeigenden Bilddaten entsprechenden Spannungspegels (V₁, ... Vₙ} an die jeweiligen Pixel der ausgewählten Zeile durch eine jeweilige Spalte umfasst,
- der aktive Lichtkasten einen Beleuchtungsschritt zum Beleuchten der Pixel aktiviert,
**dadurch gekennzeichnet, dass** es eine Schaltung zum Vorladen (4) der Pixel der Tafel bei einer Vorladespannung (Vr} umfasst, die sich von der Schreibschaltung unterscheidet und die sequentiell am Anfang jeder Adressierungsphase aktiviert wird, um einen Schritt des Vorladens (4) der Pixel vor dem Schreibschritt durch die Schreibschaltung durchzuführen, und dass die Vorladeschaltung (4) eine Vielzahl von Zeilentransistoren (TI) - einen je Zeile - und eine Vielzahl von Spaltentransistoren (Tc) - einen je Spalte - umfasst, wobei die Zeilen- und Spaltentransistoren der Vorladeschaltung gleichzeitig im Vorladeschritt aktiviert werden, die Zeilentransistoren zum gleichzeitigen Auswählen aller Zeilen der Tafel und die Spaltentransistoren zum gleichzeitigen Anlegen einer Vorladespannung (Vr) an alle Spalten.

2. Videosystem nach Anspruch 1, **dadurch gekennzeichnet, dass** die Polarität der Vorladespannung (Vr) bei jeder Adressierungsphase invertiert wird.

3. Videosystem nach Anspruch 1 oder 2, **dadurch gekennzeichnet, dass** die Vorladespannung (Vr) der Weißstufe entspricht und der Lichtkasten während des Vorladeschritts ausgeschaltet ist.

4. Videosystem nach Anspruch 3, **dadurch gekennzeichnet, dass** in jeder Adressierungsphase der Schritt des Einschaltens des Lichtkastens nach dem Schreibschritt aktiviert wird.

5. Videosystem nach Anspruch 1 oder 2, **dadurch gekennzeichnet, dass** die Vorladespannung (Vr) der Schwarzstufe entspricht und der Lichtkasten während des Vorladeschritts ausgeschaltet ist.

6. Videosystem nach Anspruch 5, **dadurch gekennzeichnet, dass** in jeder Adressierungsphase der Schritt des Einschaltens des Lichtkastens und der Schreibschritt im Wesentlichen gleichzeitig aktiviert werden.

7. Videosystem nach Anspruch 1 oder 2, **dadurch gekennzeichnet, dass** die Vorladestufe (Vr) eine Schwarzstufe ist und der Lichtkasten während des Vorladens eingeschaltet wird.

8. Videosystem nach einem beliebigen der vorhergehenden Ansprüche, **dadurch gekennzeichnet, dass** bei einer vorgegebenen, an einem vorgeladenen Pixel anzuzeigenden Graustufe der Wert des an eine entsprechende Spalte anzulegenden analogen Spannungspegels in Abhängigkeit von der Stellung der entsprechenden Zeile des Pixels in der Tafel moduliert wird.

9. Videosystem nach Anspruch 8, wobei das Anlegen eines analogen Spannungspegels (V₁, ..., V₀) an die jeweiligen Pixel einer in dem Schreibschritt ausgewählten Zeile mittels einer Digital-Analog-Wandlungsschaltung (10) und einer Menge von Werten einer analogen Referenzspannung (Vref₁, ..., Vrefₖ) erfolgt, welche eine Graustufe kodiert, **dadurch gekennzeichnet, dass** der Schreibschritt das Auswählen einer Menge von Werten einer analogen Referenzspannung in Abhängigkeit von der Position der ausgewählten laufenden Zeile in der Tafel umfasst.

10. Videosystem nach Anspruch 9, **dadurch gekennzeichnet, dass** die Werte der analogen Referenzspannung bestimmt sind, um einen Pixelsteuerungsmodus des Typs Overdrive zu ermöglichen.

11. Videosystem nach einem beliebigen der vorhergehenden Ansprüche, **dadurch gekennzeichnet, dass** die Auswahlrichtung der Tafelzeilen alle j Adressierungsphasen wechselt, wobei j eine Ganzzahl ist, die nicht gleich Null ist.

12. Videosystem, umfassend eine Flüssigkristallanzeige im sequentiellen Farbmodus nach einem beliebigen der vorhergehenden Ansprüche, wobei ein Videoframe mindestens ein mit Primärfarbe gefärbtes Subframe aufweist, **dadurch gekennzeichnet, dass** die Adressierungsphase für jedes gefärbte Subframe (ST-R, ST-V, ST-8) eines Videoframes wiederholt wird.

13. Videosystem nach Anspruch 12, **dadurch gekennzeichnet, dass** die Auswahlrichtung der Tafelzeilen von einem Videoframe zum anderen oder innerhalb eines Videoframes zwischen den mit gleicher Farbe gefärbten Subframes wechselt.

14. Videosystem nach Anspruch 1, **dadurch gekennzeichnet, dass** die Zeilen- und Spaltentransistoren der Vorladeschaltung in die Anzeige integriert oder in Bezug auf die Anzeige extern sind.

15. Videosystem nach Anspruch 1, **dadurch gekennzeichnet, dass** die Zeilentransformatoren (TI) als Diode geschaltet sind.

## Claims

1. Video system comprising a liquid crystal display with a panel (1) of pixels (2) arranged in lines and columns comprising a write circuit of pixels of the panel and a light unit for controlling an image data display of a video frame comprising at least one addressing phase of the panel lines, such as in the addressing phase:
- the write circuit of the pixels performs a write step of the lines, comprising for each line (r₁, ...rₘ), a selection phase of said line for a line time and the application on each of the pixels of the selected line, by a respective column, of an analogue voltage (Vi,...Vₙ), corresponding to the image data to display;
- the light unit activates a lighting step to light the pixels, **characterised in that** it comprises a pixel preload circuit (4) of the panel at a preload voltage (Vr), separate from the write circuit and which is activated in sequence at the start of each addressing phase to realise a pixel preload phase before said write stage by the write circuit, and **in that** the preload circuit (4) comprises a plurality of line transistors (TI), one per line and a plurality of column transistors (Tc), one per column, said line and column transistors of the preload circuit being activated simultaneously in said preload step, the line transistors to select all the lines of the panel simultaneously, and column transistors to apply a preload voltage (Vr) on all the columns simultaneously.

2. Video system according to claim 1, **characterised in that** the polarity of the preload voltage (Vr) is inverted at each addressing phase.

3. Video system according to claim 1 or 2, **characterised in that** said preload voltage (Vᵣ) corresponds to the white level and the light unit is off during said preload step.

4. Video system according to claim 3, **characterised in that** in each addressing phase, the lighting step of the light unit is activated after the writing step.

5. Video system according to claim 1 or 2, **characterised in that** said preload voltage (Vᵣ) corresponds to the black level and the light unit is off during said preload step.

6. Video system according to claim 5, **characterised in that** in each addressing phase, the lighting step of the light unit and the writing step are activated noticeably at the same time.

7. Video system according to claim 1 or 2, **characterised in that** said preload level (Vᵣ) is a black level and the light unit on during the preload.

8. Video system according to any one of the previous claims, **characterised in that** the for a given grey level to display on a preloaded pixel, the value of the analogue voltage to apply to a corresponding column is modulated according to the position in the panel of the corresponding line of the pixel.

9. Video system according to claim 8, the application of an analogue voltage level (Vi,...Vₙ) on each of the pixels of a line selected in the write step being realised by means of a digital to analogue conversion circuit (10) and of a set of a reference analogue voltage values (Vref₁...Vrefₖ) coding a grey scale, **characterised in that** the write step comprises the selection of a set of reference analogue voltage values according to the position of the current selected line, in the panel.

10. Video system according to claim 9, **characterised in that** the reference analogue voltage values are determined to enable a command mode of the pixels of Overdrive type.

11. Video system according to any one of the previous claims, **characterised in that** the selection direction of the lines of the panel is alternated every j addressing phases, j non null integer.

12. Video system comprising a liquid crystal display in colour sequential mode according to any one of the preceding claims, a video frame comprising at least one sub-frame coloured in a primary colour, **characterised in that** said addressing phase is repeated for each coloured sub-frame (SF-R, SF-G, SF-B) of a video frame.

13. Video system according to claim 12, **characterised in that** the selection direction of the lines of the panel is alternated from video frame to video frame or in a video frame, between the coloured sub-frames of the same colour.

14. Video system according to claim 1, **characterised in that** said line and column transistors of the preload circuit are built into the display or external to the display.

15. Video system according to claim 1, **characterised in that** said line transistors (TI) are diode-connected.
